# EUROPEAN PATENT APPLICATION

(11) **EP 0 763 668 A1**
(43) Date of publication of application: **19.03.1997**
(21) Application number: 96909332.7
(22) Date of filing: 10.04.1996
(51) Int. Cl.: F16D 63/00, B61H 7/12, B23Q 1/25, B23Q 5/28

(54) **BRAKE MECHANISM FOR A MACHINE TOOL USING A LINEAR MOTOR**

(30) Priority: 10.04.1995 JP 83579/95
(71) Applicant: FANUC LTD., Minamitsuru-gun, Yamanashi 401-05 (JP)
(72) Inventor: ITO, Susumu Fanuc Manshonharimomi Room 7-204, Yamanashi 401-05 (JP); KOJIMA, Kunio Fanuc Dai-3 Vira-karamatsu, Yamanashi 401-05 (JP)
(74) Representative: Billington, Lawrence Emlyn
(86) International application number: JP9600985
(87) International publication number: WO9632595

(57) **Abstract**

In a machine tool using a linear motor for driving a table (1), a shifting magnetic field generating device (2) is secured to its main body (3) and a guide rail (5) is also provided on the main body. Moreover, a magnetic pole (4) is provided on the table (1) and a guide groove or a rolling semi-circular unit (9) is formed thereon. A mechanical brake mechanism for use in this machine tool comprises the guide rail (5) and arm-like members (6) mounted on the table (1) and operating so as to hold the guide rail (5) from the opposite sides thereof.

## Description

### Technical Field

The present invention relates to a brake system for stopping the movement of a table or saddle of a machine tool in the case where a linear motor is used to move the same with respect to the body of the machine tool.

### Background Art

A linear motor of a synchronous-motor type can accurately execute speed control including acceleration and deceleration by controlling the frequency of applied voltage. Accordingly, this linear motor is utilized to drive a table or saddle of a machine tool.

In the machine tool using this linear motor, however, if an attempt is made to quickly decelerate the movement of a driven body, such as the table or saddle, by the frequency control only, very high electric energy is required in order to obtain a necessary force (braking force) for the purpose, thus entailing poor economy. To solve this problem, therefore, a method is devised to obtain the necessary braking force by additionally using a mechanical brake.

If the machine tool using the linear motor is designed so as to be furnished with the mechanical brake, however, its structural problems and the like becomes a hindrance to the reduction of installation cost.

### Disclosure of the Invention

The object of the present invention is to provide a mechanical brake system capable of being incorporated at low cost in a machine tool that uses a linear motor.

In order to achieve the above object, a mechanical brake system according to the present invention utilizes a guide rail for guiding a driven body, such as a table or saddle, which usually is attached to the body of a machine tool using a linear motor. The driven body that moves on the guide rail is provided with retractable arm-shaped push members, which can advance toward the guide rail so that their respective distal ends press on the side faces of the guide rail, thereby producing friction with the guide rail.

In braking the moving table or saddle, the applied voltage is subjected to frequency control such that the linear motor is quickly decelerated, and the push members attached to the table or saddle are actuated so that their distal ends press on the side faces of the guide rail, individually.

As described above, the mechanical brake according to the present invention utilizes the guide rail that is originally attached to the machine tool, so that the cost for installing the mechanical brake can be reduced.

### Brief Description of the Drawings

FIG. 1 is a conceptional diagram of a brake system for a machine tool using a linear motor according to one embodiment of the present invention; and
FIG. 2 is a conceptual diagram of a brake system for a machine tool using a linear motor according to another embodiment of the present invention.

### Best Mode of Carrying Out the Invention

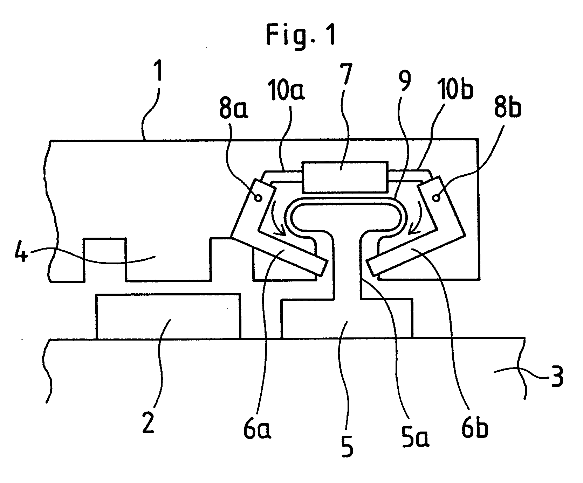

Referring to FIG. 1, an embodiment of the present invention will be described. In FIG. 1, a driven body 1, such as a table or saddle, is driven in a direction perpendicular to the drawing plane with respect to a body 3 of a machine tool.

The machine tool body 3 is fixedly fitted with a shifting magnetic field generator 2 and provided with a guide rail 5. On the other hand, the driven body (hereinafter referred to as table) 1 is provided with a magnetic pole 4 and formed with a guide groove or semicircular rolling unit 9.

The shifting magnetic field generator 2 fixed to the body 3 and the magnetic pole 4 attached to the table constitutes a linear synchronous motor, and a shifting magnetic field is generated in a direction perpendicular to the drawing plane. The moving speed of the table 1 is accurately determined in accordance with the frequency at which the shifting magnetic field generator 2 is energized.

The guide groove or semicircular rolling unit 9 of the table 1 is always in engagement with the glide rail 5 on the body 1, whereby the table is prevented from being disengaged in directions (upward and lateral) perpendicular to the moving direction as it moves with respect to the body 1. Although a linear motor, in general, can augment a thrust in the direction in which the driven body is to be moved, it cannot increase a force in a direction perpendicular to the moving direction, that is, a force to restrain the driven body from deviating from its moving direction. Accordingly, it is a common practice that the table 1 is guided by means of the guide rail 5 in a machine tool in which the table 1 is moved in a predetermined direction with respect to the body by using a linear motor.

A hydraulic cylinder 7 of a double-rod type, for use as drive means for a mechanical brake, is disposed over that portion of the table 1 in which the guide groove or semicircular rolling unit 9 is formed. Arranged on the left- and right-hand sides, respectively, of the hydraulic cylinder 7 are rods 10a and 10b, which simultaneously project outward or recede inward as the hydraulic cylinder 7 is actuated. A hydraulic pressure source (not shown) for supplying hydraulic pressure to the hydraulic cylinder 7 is supported by the body 3.

The respective distal ends of the rods 10a and 10b are connected to the respective proximal ends of arms 6a and 6b, respectively. These guide rail holding arms 6a and 6b are supported on shafts 8a and 8b which are fixedly arranged on the table, being swingable around the shafts 8a and 8b respectively. The arms 6a and 6b are substantially L-shaped.

When the hydraulic cylinder 7 is actuated to move the rods 10a and 10b simultaneously outward, the arms 6a and 6b rock around the shafts 8a and 8b, respectively, and their distal ends simultaneously press on the opposite side faces of the guide rail 5, whereupon a braking force acts so as to prevent the movement of the table 1. The distal ends of the arms 6a and 6b are kept pressed against the opposite side faces of the guide rail 5 as long as the hydraulic pressure is supplied to the hydraulic cylinder 7, so that the moving table 1 can be braked under a desired pressure for a desired period of time. The brakes can be disengaged simply by actuating the hydraulic cylinder 7 so that the distal ends of the arms 6a and 6b rock away from the opposite side faces of the guide rail 5, individually.

Thus, the arms 6a and 6b, which swing by means of the hydraulic pressure, and the guide rail 5 constitute the mechanical brake. When the table 1 moving over the body 3 has to be quickly decelerated or stopped, the frequency at which the shifting magnetic field generator 2 is energized is controlled, and the hydraulic cylinder 7 is actuated to operate the mechanical brake.

In the embodiment of the mechanical brake described above with reference to FIG. 1, the braking force is generated as the pair of arms 6a and 6b approach the guide rail 5 from both sides, left and right, and simultaneously hold the guide rail between them. Thus, when the pair of arms 6a and 6b, left and right, having the same shape simultaneously hold the guide rail 5, the table 1 cannot be subjected to any force in a direction perpendicular to the table moving direction with respect to the body 3.

When the mechanical brake of this embodiment is actuated, therefore, a force in a direction perpendicular to the drawing plane of FIG. 1 acts on the pair of arms 6a and 6b. This force is supported by the side faces of the guide groove or semicircular rolling unit 9, in which the arms 6a and 6b on the table 1 move, and the shafts 8a and 8b, so that a force transmitted to the rods 10 and 10b of the hydraulic cylinder 7 is small.

In the case where the guide rail 5 is provided on both the left and lights sides of the body 3 with respect to the moving direction of the table 1, each guide rail 5 need not be held by means of the pair of arms 6a and 6b. For example, the arms 6a and 6b may be arranged so that the one arm 6b abuts against the right-hand side face of the guide rail 5 that is located on the right of the body 3, and at the same time, the other arm 6a abuts against the left-hand side face of the guide rail 5 that is located on the left of the body 3. According to this arrangement, forces generated on the left- and right-hand sides when the mechanical brake is applied offset each other, so that no force to move the table 1 laterally with respect to the body 3 can be produced.

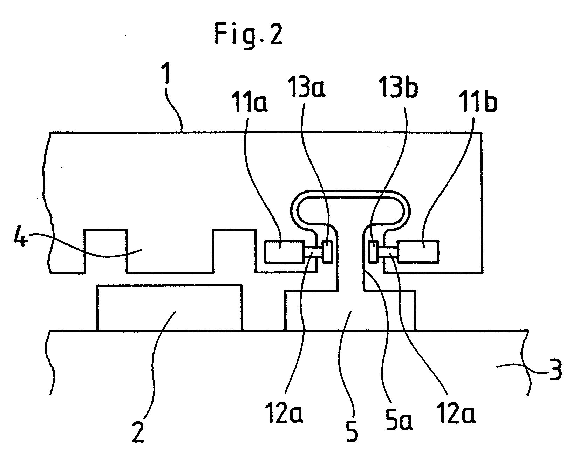

Referring now to FIG. 2, another embodiment of the present invention will be described.

As shown in FIG. 2, this embodiment differs from the embodiment shown in FIG. 1 only in the structure of the mechanical brake, though it is similar to the one shown in FIG. 1 in that a machine tool body 3 is fixedly fitted with a shifting magnetic field generator 2 and provided with a guide rail 5, and that a table 1 is provided with a magnetic pole 4 and formed with a guide groove or semicircular rolling unit 9.

In this embodiment, hydraulic cylinders 11a and 11b may be arranged individually in those positions of the table 1 which face a neck portion 5a of the guide rail 5, with pressure-contact members 13a and 13b for pressing the neck portion 5a of the guide rail 5 connected directly to piston rods 12a and 12b of the hydraulic cylinders 11a and 11b, respectively. Thereupon, when the hydraulic cylinders 11a and 11b are actuated, the pressure-contact members 13a and 13b press on the left- and right-hand side faces of the neck portion 5a, respectively, so that a braking force is generated. In this case, the table 1 should be provided with holes or the like for guiding the piston rods 12a and 12b, in order to support forces acting on the piston rods in directions perpendicular to the axial direction of the piston rods when the braking force is being generated.

Although the hydraulic cylinder or cylinders are used as the drive source for the mechanical brake in the embodiments shown in FIGS. 1 and 2 described above, air cylinders or electromagnetic solenoids may be used in place of the hydraulic cylinders.

## Claims

1. A brake system attached to a machine tool using a linear motor for driving a driven body such as a table or a saddle, comprising:
a guide rail on the body of the machine tool for guiding said driven body; and
push means attached to the driven body and acting so as to press on the guide rail.

2. A brake system attached to a machine tool using a linear motor according to claim 1, wherein said push member constituting said brake system is composed of a pair of arm members arranged so as to hold the guide rail from both sides.

3. A brake system for a machine tool using a linear motor, wherein:
said machine tool has a body fixedly fitted with a shifting magnetic field generator and provided with a guide rail, has a driven body, such as a table or saddle, provided with a magnetic pole confronting said shifting magnetic field generator and formed with a guide groove, so that the shifting magnetic field generator fixed to the body and the magnetic pole attached to the driven body constitutes a linear motor, and
said brake system includes a push member attached to the driven body and adapted to press on the side face of the guide rail when advanced to maintain a state such that a predetermined force of pressure is applied to the side face, but to remove the force of pressure when retreated, and drive means for controlling the advancing and retreating motions of the push member.

4. A brake system for a machine tool using a linear motor according to claim 3, wherein said push member constituting said brake system is composed of a pair of arm members arranged so as to hold the guide rail from both sides.

5. A brake system for a machine tool using a linear motor according to claim 4, wherein said pair of push members are driven by drive means attached to the driven body so that the push members are driven to simultaneously press on the guide rail or to simultaneously leave the guide rail.

6. A brake system for a machine tool using a linear motor according to claim 3 or 5, wherein said drive means is composed of a hydraulic cylinder.

7. A brake system for a machine tool using a linear motor according to claim 3 or 5, wherein said drive means is composed of a double-rod hydraulic cylinder.

8. A brake system for a machine tool using a linear motor according to claim 3 or 5, wherein said drive means is composed of an air cylinder.

9. A brake system for a machine tool using a linear motor according to claim 3 or 5, wherein said drive means is composed of an electromagnetic solenoid.
